# EUROPÄISCHE PATENTANMELDUNG

(11) **EP 3 582 041 A1**
(43) Veröffentlichungstag der Anmeldung: **18.12.2019**
(21) Anmeldenummer: 18176905.0
(22) Anmeldetag: 11.06.2018
(51) Int. Cl.: G05B 19/4061

(54) **PRÜFUNG EINER BEARBEITUNGSSITUATION VOR AUSFÜHREN DER BEARBEITUNG**

(71) Anmelder: Siemens Aktiengesellschaft, 80333 München (DE)
(72) Erfinder: Bretschneider, Jochen, 73732 Esslingen (DE); Hamm, Carsten, 91330 Eggolsheim (DE)

(57) **Zusammenfassung**

Einer Werkzeugmaschine (1) ist eine Auswertungseinrichtung (10) zugeordnet. Die Auswertungseinrichtung (10) nimmt vor Beginn der Ausführung eines Abschnitts einer Bearbeitung eines realen Werkstücks (2) durch die Werkzeugmaschine (1) von einer bildgebenden Einrichtung (9) ein dreidimensionales Bild (B) eines realen Arbeitsraums (5) der Werkzeugmaschine (1) entgegen. Sie ermittelt anhand des erfassten dreidimensionalen Bildes (B) die Anzahl, die Art und/oder die Anordnung von im Arbeitsraum (5) befindlichen realen Objekten (2, 4, 15, 16) . Sie vergleicht die Anzahl, die Art und/oder die Anordnung der im Arbeitsraum (5) befindlichen realen Objekte (2, 4, 15, 16) mit der Anzahl, der Art und/oder der Anordnung von virtuellen Referenzobjekten (2', 4', 15'). Sie ermittelt anhand des Vergleichs, ob die Ausführung des Abschnitts der Bearbeitung des realen Werkstücks (2) durch die Werkzeugmaschine (1) zulässig ist. Im einen Fall übermittelt die Auswertungseinrichtung (10) ein Freigabesignal (F1) an eine die Werkzeugmaschine (1) steuernde numerische Steuerung (6), im anderen Fall nicht.

## Beschreibung

Die vorliegende Erfindung geht aus von einem Betriebsverfahren für eine Werkzeugmaschine,
- wobei eine Auswertungseinrichtung vor Beginn der Ausführung eines Abschnitts einer Bearbeitung eines realen Werkstücks durch die Werkzeugmaschine von einer bildgebenden Einrichtung ein Bild eines realen Arbeitsraums der Werkzeugmaschine entgegennimmt,
- wobei die Auswertungseinrichtung anhand des erfassten Bildes die Anordnung von im Arbeitsraum befindlichen realen Objekten ermittelt,
- wobei die Auswertungseinrichtung die Anordnung der im Arbeitsraum befindlichen realen Objekte mit der Anordnung von virtuellen Referenzobjekten vergleicht.

Die vorliegende Erfindung geht weiterhin aus von einem Computerprogramm, wobei das Computerprogramm Maschinencode umfasst, der von einer Auswertungseinrichtung abarbeitbar ist, wobei die Abarbeitung des Maschinencodes durch die Auswertungseinrichtung bewirkt, dass die Auswertungseinrichtung ein derartiges Betriebsverfahren ausführt.

Die vorliegende Erfindung geht weiterhin aus von einer Auswertungseinrichtung, wobei die Auswertungseinrichtung mit einem derartigen Computerprogramm programmiert ist, so dass die Auswertungseinrichtung im Betrieb ein derartiges Betriebsverfahren ausführt.

Die vorliegende Erfindung geht weiterhin aus von einer Werkzeugmaschine,
- wobei die Werkzeugmaschine eine Anzahl von Achsen aufweist, mittels derer ein reales Werkzeug und ein reales Werkstück innerhalb eines Arbeitsraums der Werkzeugmaschine relativ zueinander verfahrbar sind,
- wobei die Werkzeugmaschine eine numerische Steuerung aufweist, von der die Achsen zur Bearbeitung des realen Werkstücks durch die Werkzeugmaschine lagegeregelt ansteuerbar sind,
- wobei die Werkzeugmaschine eine bildgebende Einrichtung aufweist, mittels derer ein Bild des realen Arbeitsraums der Werkzeugmaschine erfassbar ist,
- wobei der Werkzeugmaschine eine derartige Auswertungseinrichtung zugeordnet ist, die zur Entgegennahme der von der bildgebenden Einrichtung erfassten Bilder mit der bildgebenden Einrichtung und zur Kommunikation mit der numerischen Steuerung mit der numerischen Steuerung verbunden ist.

Die oben genannten Gegenstände sind beispielsweise aus der WO 2012/095 199 A1 bekannt. Ein derartiger Offenbarungsgehalt auch ist der Publikation "Werkstückoffsetberechnung oder -erkennung mit einer Kamera an der SINUMERIK" der Siemens AG, veröffentlicht unter https://support.industry.siemens.com/cs/ww/de/view/109746848 zu entnehmen. Bei diesen Vorgehensweisen wird die Anordnung des Werkstücks im Arbeitsraum erkannt und in Abhängigkeit von der erkannten Anordnung ein Teileprogramm, das die Bearbeitung des Werkstücks definiert, derart modifiziert, dass die tatsächliche Bearbeitung trotz einer etwaigen Abweichung der Anordnung des realen Werkstücks von einer idealen Anordnung das gewünschte Ergebnis liefert.

Bei der Bearbeitung von Werkstücken auf Werkzeugmaschinen können viele Fehler auftreten. Beispielsweise kann ein Werkstück bzw. ein Rohling in einer Werkstückaufnahme der Werkzeugmaschine befestigt werden, der nicht zum abzuarbeitenden Teileprogramm passt. Auch ist es umgekehrt möglich, dass ein Teileprogramm in die numerische Steuerung der Werkzeugmaschine geladen wird, welches nicht zum Werkstück bzw. zum Rohling passt. Auch andere Fehler sind möglich. Beispielsweise ist es möglich, dass das Werkstück bzw. der Rohling im Arbeitsraum der Werkzeugmaschine an einer falschen Stelle angeordnet wird, dass zum Befestigen des Werkstücks andere Spannelemente als eigentlich vorgesehen verwendet werden oder dass die Spannelemente an anderen Orten als eigentlich vorgesehen angeordnet werden. Auch ist es möglich, dass versehentlich Werkzeuge - beispielsweise ein Schraubenschlüssel - oder andere Fremdkörper, welche die Gefahr einer Kollision bewirken würden, im Arbeitsraum zurückgelassen werden.

Durch die oben genannten Fehler kann es bei der Bearbeitung des Werkstücks in der Werkzeugmaschine unter Umständen zu einer Beschädigung des Werkstücks oder der Werkzeugmaschine bzw. von Teilen der Werkzeugmaschine (beispielsweise einem Werkzeug oder einer Werkzeugspindel) kommen. In jedem Fall aber ist eine reduzierte Effektivität die Folge.

Zur Vermeidung derartiger Fehler werden oftmals Facharbeiter eingesetzt, die durch verantwortliches und umsichtiges Handeln derartige Fehler vermeiden. Facharbeiter sind jedoch teuer. Ferner können auch Facharbeitern Fehler unterlaufen, so dass die Fehler der oben genannten Art zwar unwahrscheinlicher sind, aber nicht ausgeschlossen werden können.

Eine weitere Möglichkeit besteht darin, während der Arbeitsvorbereitung oder an der Werkzeugmaschine vorab eine Simulation der Bearbeitung auszuführen. In diesem Fall muss jedoch sichergestellt sein, dass die konkrete Situation an der Werkzeugmaschine mit der simulierten Bearbeitung 1:1 übereinstimmt.

Eine weitere Möglichkeit besteht darin, beispielsweise nach einem Werkzeugwechsel eine kontaktlose oder eine kontaktbehaftete Abtastung des Werkzeugs vorzunehmen. Damit kann sichergestellt werden, dass das richtige Werkzeug verwendet wird. Nachteilig bei dieser Vorgehensweise ist, dass ausschließlich das Werkzeug geprüft werden kann. Eine Überprüfung des Werkstücks und eine Überprüfung der Aufspannsituation ist ebenfalls möglich. Im Stand der Technik werden hierzu mechanische Teststifte oder 3-D-Messtaster benötigt. Derartige Überprüfungen sind umständlich, zeitaufwendig und kostenträchtig.

Allen Möglichkeiten ist gemeinsam, dass sie nicht zwingend und vor allem nicht vollständig ausgeführt werden müssen. Das Risiko einer Fehlbedienung kann daher immer noch nicht ausgeschlossen werden.

Die Aufgabe der vorliegenden Erfindung besteht darin, Möglichkeiten zu schaffen, mittels derer auf einfache und zuverlässige Weise fehlerhafte Bearbeitungen vermieden werden können.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 10.

Erfindungsgemäß wird ein Betriebsverfahren geschaffen, bei dem eine Auswertungseinrichtung
- von einer bildgebenden Einrichtung vor Beginn der Ausführung eines Abschnitts einer Bearbeitung eines realen Werkstücks durch die Werkzeugmaschine ein dreidimensionales Bild eines realen Arbeitsraums der Werkzeugmaschine entgegennimmt,
- anhand des erfassten dreidimensionalen Bildes die Anzahl, die Art und/oder die Anordnung von im Arbeitsraum befindlichen realen Objekten ermittelt,
- die Anzahl, die Art und/oder die Anordnung der im Arbeitsraum befindlichen realen Objekte mit der Anzahl, der Art und/oder der Anordnung von virtuellen Referenzobjekten vergleicht,
- anhand des Vergleichs ermittelt, ob die Ausführung des Abschnitts der Bearbeitung des realen Werkstücks durch die Werkzeugmaschine zulässig ist, und
- im Falle der Zulässigkeit der Bearbeitung ein Freigabesignal an eine die Werkzeugmaschine steuernde numerische Steuerung und im Falle der Unzulässigkeit der Bearbeitung das Freigabesignal nicht an die numerische Steuerung übermittelt.

Ein erster Unterschied der erfindungsgemäßen Vorgehensweise besteht somit darin, dass das Bild ein dreidimensionales Bild ist. Ein zweiter Unterschied der erfindungsgemäßen Vorgehensweise besteht darin, dass die Auswertungseinrichtung - alternativ oder zusätzlich zur Anordnung der realen Objekte - die Anzahl und/oder die Art der im Arbeitsraum befindlichen realen Objekte ermittelt und auch mit der Anzahl und/oder der Art der virtuellen Referenzobjekte vergleicht. Ein dritter Unterschied besteht darin, dass nicht lediglich stets und unbedingt ein Teileprogramm ausgeführt wird, also die Bearbeitung des Werkstücks vorgenommen wird. Vielmehr prüft die Auswertungseinrichtung, ob die Ausführung des Abschnitts der Bearbeitung des realen Werkstücks durch die Werkzeugmaschine zulässig ist oder nicht. Basierend auf dieser binären Entscheidung übermittelt die Auswertungseinrichtung im Falle der Zulässigkeit der Bearbeitung das Freigabesignal und im Falle der Unzulässigkeit der Bearbeitung nicht. Somit kann die numerische Steuerung je nachdem, ob ihr das Freigabesignal
übermittelt wird oder nicht, die Bearbeitung des realen Werkstücks ausführen oder nicht ausführen.

Das Freigabesignal kann nach Bedarf bestimmt sein. Beispielsweise kann eine explizite Meldung in Form eines Telegramms an die numerische Steuerung übermittelt werden. Alternativ kann beispielsweise ein einfaches binäres Signal über eine einzelne Leitung gesetzt oder zurückgesetzt werden. Falls das Freigabesignal nicht übermittelt wird, ist es möglich, dass stattdessen ein Fehlersignal oder eine Fehlermeldung übermittelt wird. Der Unterschied zwischen einem Fehlersignal und einer Fehlermeldung besteht darin, dass ein Fehlersignal für alle Fehler einheitlich ist, während bei einer Fehlermeldung eine Aufschlüsselung nach Art des Fehlers erfolgt.

In vielen Fällen ist es von Vorteil, wenn die Auswertungseinrichtung von der numerischen Steuerung eine Anfrage entgegennimmt und das Freigabesignal aufgrund der Anfrage - und insbesondere nur aufgrund der Anfrage - an die numerische Steuerung übermittelt. Dadurch kann die Effizienz optimiert werden, da nur dann ein Freigabesignal ermittelt und gegebenenfalls übermittelt wird, wenn es auch erforderlich ist.

Es ist möglich, dass die Auswertungseinrichtung aufgrund der Anfrage stets das vollständige erfindungsgemäße Betriebsverfahren ausführt. Alternativ ist es möglich, dass die Auswertungseinrichtung aufgrund der Anfrage in Abhängigkeit davon, ob ihr bereits ein dreidimensionales Bild des realen Arbeitsraums der Werkzeugmaschine vorliegt und ob ein ihr gegebenenfalls bereits vorliegendes dreidimensionales Bild des realen Arbeitsraums der Werkzeugmaschine aktuell ist, entweder das vollständige erfindungsgemäße Betriebsverfahren ausführt oder anhand des ihr bereits vorliegenden aktuellen dreidimensionalen Bildes des realen Arbeitsraums der Werkzeugmaschine entscheidet, ob sie das Freigabesignal an die numerische Steuerung übermittelt oder nicht. In dem Fall, dass die Auswertungseinrichtung die Auswertung anhand des ihr bereits vorliegenden aktuellen dreidimensionalen Bildes des realen Arbeitsraums der Werkzeugmaschine vornimmt, können selbstverständlich auch fortgeschrittene Stadien der Auswertung verwertet werden. Wenn ein Bild vorhanden und aktuell ist, so kann die Auswertungseinrichtung ermitteln, ob sie das Freigabesignal übermittelt oder nicht,
- anhand der Anzahl, der Art und/oder der Anordnung von im Arbeitsraum befindlichen realen Objekten, sofern diese bereits ermittelt sind, oder
- anhand des mit der Anzahl, der Art und/oder der Anordnung von virtuellen Referenzobjekten erfolgten Vergleichs, sofern dieser bereits vorgenommen wurde.

Sofern in der Auswertungseinrichtung noch gespeichert ist, ob das Freigabesignal zu übermitteln ist oder nicht, kann auch direkt das vorhandene Freigabesignal übermittelt werden bzw. nicht übermittelt werden.

Es ist möglich, dass die numerische Steuerung prüft, ob eine Anfragebedingung erfüllt ist, und die Anfrage jedes mal, wenn die Anfragebedingung erfüllt ist, an die Auswertungseinrichtung übermittelt. Dies führt dazu, dass die Anfrage nach Bedarf immer wieder gestellt werden kann.

Die Anfragebedingung kann aufgrund verschiedener Voraussetzungen erfüllt sein, wobei die Voraussetzungen sowohl alternativ als auch kumulativ erfüllt sein können.

So ist es beispielsweise möglich, dass die Anfragebedingung dadurch erfüllt wird, dass die numerische Steuerung von einer Bedienperson einen Startbefehl zum Ausführen des Abschnitts der Bearbeitung des realen Werkstücks entgegennimmt. Diese Ausgestaltung hat den Vorteil, dass jedes Mal vor dem Starten der Bearbeitung durch die Bedienperson geprüft wird, ob die Bearbeitung zulässig ist oder nicht. In diesem Fall ist es weiterhin möglich, dass die Auswertungseinrichtung zusätzlich auch protokolliert, dass der Startbefehl vorgegeben wurde und ob zugehörig das Freigabesignal ermittelt werden konnte.

Ebenso ist es möglich, dass die Anfragebedingung dadurch erfüllt wird, dass die numerische Steuerung nach einem Öffnen eines Zugangs zum Arbeitsraum ein Schließen des Zugangs erkennt. Insbesondere ist ein Zugang zum Arbeitsraum - beispielsweise eine Tür - oftmals mit einem Sensor versehen, damit die Bearbeitung unterbrochen werden kann, wenn die Bedienperson den Arbeitsraum betritt. Derartige Unterbrechungen dienen der Sicherheit der Bedienperson. Die numerische Steuerung kann aber nicht "wissen", welche Handlungen die Bedienperson nach dem Betreten des Arbeitsraums vorgenommen hat. Aus Sicht der numerischen Steuerung besteht somit ein unbekannter Zustand. Durch die erneute Anforderung eines Freigabesignals - impliziert durch die Anfrage der numerischen Steuerung - kann gewährleistet werden, dass eine Bearbeitung des Werkstücks weiterhin gefahrlos möglich ist.

Unter Umständen kann es sogar sinnvoll sein, dass das Öffnen des Zugangs als solches bereits bewirkt, dass die Auswertungseinrichtung von der bildgebenden Einrichtung ein (weiteres) dreidimensionales Bild des realen Arbeitsraums der Werkzeugmaschine entgegennimmt, anhand des erfassten dreidimensionalen Bildes die Anzahl, die Art und/oder die Anordnung von im Arbeitsraum befindlichen realen Objekten ermittelt. Diese realen Objekte können unter Umständen bei der nachfolgenden Ausführung des Betriebsverfahrens als Referenzobjekte herangezogen werden. In diesem Fall kann geprüft werden, ob die Bedienperson etwas geändert hat.

In manchen Fällen ist es gerade Sinn und Zweck, dass die Bedienperson eine Änderung vornimmt. In diesem Fall ist die obenstehende Vorgehensweise nicht zielführend. Es sind aber durchaus auch Fälle denkbar, in denen die Bedienperson den Zugang "einfach so" (oder versehentlich) geöffnet hat. Insbesondere in diesem Fall kann die obenstehende Vorgehensweise zielführend sein. Die genannte Vorgehensweise kann weiterhin auch dann zielführend sein, wenn die Bedienperson zwar gezielt eine Änderung vorgenommen hat, der Auswertungseinrichtung aber zusätzlich auch vorgeben kann, welche Änderungen sie vorgenommen hat, so dass die Auswertungseinrichtung die Referenzobjekte entsprechend anpassen bzw. aktualisieren kann.

Alternativ oder zusätzlich ist es möglich, dass die Anfragebedingung dadurch erfüllt wird, dass die Werkzeugmaschine aufgrund der Steuerung durch die numerische Steuerung ein neues Werkzeug in einen Werkzeughalter der Werkzeugmaschine eingesetzt hat. In diesem Fall kann jedes Mal nach einem Werkzeugwechsel geprüft werden, ob tatsächlich das richtige Werkzeug in den Werkzeughalter eingesetzt wurde.

In der Regel wird die numerische Steuerung im Falle der Übermittlung des Freigabesignals den Abschnitt der Bearbeitung des realen Werkstücks ausführen. Anderenfalls wird die numerische Steuerung die Bearbeitung des realen Werkstücks hingegen nicht ausführen. Es ist aber möglich, dass die Auswertungseinrichtung im Falle der Unzulässigkeit der Bearbeitung eine Fehlermeldung an die numerische Steuerung übermittelt. In diesem Fall kann die numerische Steuerung einen aus der Fehlermeldung abgeleiteten Hinweis über eine Benutzerschnittstelle an eine Bedienperson der numerischen Steuerung ausgibt. Dadurch kann die Bedienperson darauf hingewiesen werden, welches Problem konkret besteht, so dass die Bedienperson geeignet reagieren kann.

In manchen Fällen kann der Grund, aufgrund dessen das Freigabesignal nicht übermittelt wird, unkritisch sein. In diesem Fall ist es möglich, dass die numerische Steuerung von der Bedienperson einen Zusatzbefehl entgegennimmt und aufgrund der Entgegennahme des Zusatzbefehls ohne erneute Übermittlung der Anfrage den Abschnitt der Bearbeitung des realen Werkstücks ausführt. In diesem Fall ist der Zusatzbefehl ein bedingungsloser "Overrule". Dadurch kann die Bedienperson trotz des Fehlens des Freigabesignals die Bearbeitung des realen Werkstücks freigeben. In kritischen Fällen führt die numerische Steuerung aufgrund der Entgegennahme des Zusatzbefehls jedoch nur mit einer erneuten Übermittlung der Anfrage den Abschnitt der Bearbeitung des realen Werkstücks aus. In diesem Fall ist der Zusatzbefehl die Aufforderung an die numerische Steuerung, eine erneute Überprüfung durch die Auswertungseinrichtung vornehmen zu lassen. Ob die eine oder die andere Vorgehensweise ergriffen wird, kann - beispielsweise - von der Art der Fehlermeldung und/oder von der Art des Zusatzbefehls ("Overrule" oder "erneute Überprüfung") abhängen.

Die Aufgabe wird weiterhin durch ein Computerprogramm mit den Merkmalen des Anspruchs 11 gelöst. Erfindungsgemäß bewirkt die Abarbeitung des Maschinencodes durch die Auswertungseinrichtung, dass die Auswertungseinrichtung ein erfindungsgemäßes Betriebsverfahren ausführt.

Es ist sogar möglich, dass die Auswertungseinrichtung mit der numerischen Steuerung eine Einheit bildet. In diesem Fall kann die Abarbeitung des Maschinencodes durch die Auswertungseinrichtung zusätzlich bewirken, dass die Auswertungseinrichtung ein erfindungsgemäßes Betriebsverfahren ausführt, soweit es die zusätzlichen, von der numerischen Steuerung ergriffenen Maßnahmen betrifft.

Die Aufgabe wird weiterhin durch eine Auswertungseinrichtung mit den Merkmalen des Anspruchs 13 gelöst. Erfindungsgemäß ist die Auswertungseinrichtung mit einem erfindungsgemäßen Computerprogramm programmiert, so dass die Auswertungseinrichtung im Betrieb ein erfindungsgemäßes Betriebsverfahren ausführt.

Es ist auch hier wieder möglich, dass die Auswertungseinrichtung mit der numerischen Steuerung eine Einheit bildet. In diesem Fall kann die Abarbeitung des Maschinencodes durch die Auswertungseinrichtung zusätzlich bewirken, dass die Auswertungseinrichtung ein erfindungsgemäßes Betriebsverfahren ausführt, soweit es die zusätzlichen, von der numerischen Steuerung ergriffenen Maßnahmen betrifft.

Die Aufgabe wird weiterhin durch eine Werkzeugmaschine mit den Merkmalen des Anspruchs 15 gelöst. Erfindungsgemäß ist bei einer Werkzeugmaschine der eingangs genannten Art die bildgebende Einrichtung derart ausgebildet, dass sie ein dreidimensionales Bild des realen Arbeitsraums der Werkzeugmaschine erfasst. Weiterhin ist die der Werkzeugmaschine zugeordnete Auswertungseinrichtung erfindungsgemäß ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Werkzeugmaschine,
- FIG 2: ein Ablaufdiagramm,
- FIG 3: ein Bild,
- FIG 4: eine virtuelle Szene und
- FIG 5 bis 11: Ablaufdiagramme.

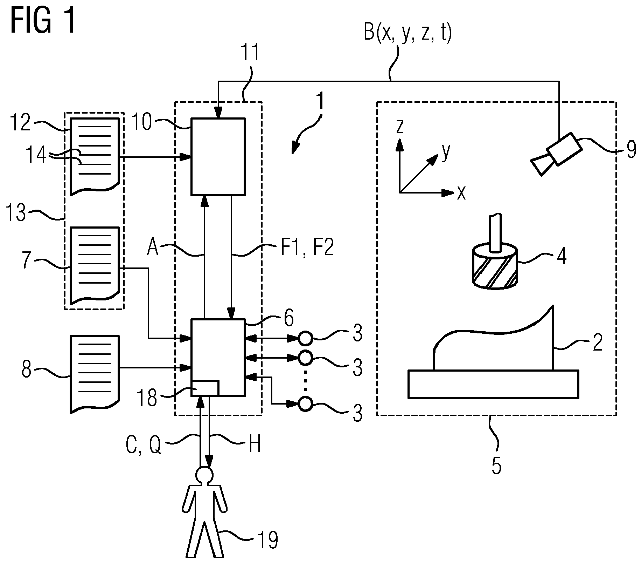

Gemäß FIG 1 soll mittels einer Werkzeugmaschine 1 ein reales Werkstück 2 bearbeitet werden. Zu diesem Zweck weist die Werkzeugmaschine 1 eine Anzahl von Achsen 3 auf. Die Anzahl an Achsen 3 liegt in der Regel bei drei oder darüber. Es sind aber auch Ausgestaltungen mit weniger als drei Achsen möglich. Mittels der Achsen 3 sind ein reales Werkzeug 4 und das reale Werkstück 2 innerhalb eines realen Arbeitsraums 5 relativ zueinander verfahrbar. In manchen, seltenen Fällen ist das reale Werkzeug 4 stillstehend und nur das reale Werkstück 2 wird bewegt. In anderen Fällen ist das reale Werkstück 2 stillstehend und nur das reale Werkzeug 4 wird bewegt. Oftmals ist die Bewegung jedoch aufgeteilt, so dass mindestens eine der Achsen 3 auf das reale Werkstück 2 und mindestens eine der Achsen 3 auf das reale Werkzeug 4 wirkt. In der Regel ist im Ergebnis - direkt oder indirekt - zumindest eine Verfahrbarkeit in drei Richtungen x, y, z eines rechtwinkligen kartesischen Koordinatensystems möglich.

Zum Ansteuern der Achsen 3 weist die Werkzeugmaschine 1 eine numerische Steuerung 6 auf. Mittels der numerischen Steuerung 6 können die Achsen 3 zur Bearbeitung des realen Werkstücks 2 durch die Werkzeugmaschine 1 lagegeregelt angesteuert werden. Die numerische Steuerung 6 ist mit einem Steuerprogramm 7 programmiert. Das Steuerprogramm 7 ist das der prinzipiellen Wirkungsweise der numerischen Steuerung 6 zugrunde liegende Programm, also das Echtzeit-Betriebssystem. Zusätzlich ist die numerische Steuerung 6 mit einem Teileprogramm 8 programmiert, das die konkrete Bearbeitung des realen Werkstücks 2 durch das reale Werkzeug 4 festlegt.

Die Werkzeugmaschine 1 weist weiterhin eine bildgebende Einrichtung 9 auf. Mittels der bildgebenden Einrichtung 9 werden Bilder B des realen Arbeitsraums 5 erfasst. Die Bilder B werden jeweils zu einem Zeitpunkt t erfasst. Sie sind in allen drei räumlichen Richtungen x, y, z ortsaufgelöst. Es handelt sich also um dreidimensionale Bilder B. Die Erfassung derartiger Bilder B ist Fachleuten allgemein bekannt. Beispielsweise kann die bildgebende Einrichtung 9 mehrere Kameras umfassen, aus deren zweidimensionalen Bildern ein stereoskopisches Bild - also das dreidimensionale Bild B - zusammengesetzt wird. Auch ist es möglich, ein Streifenmuster in den Arbeitsraum 5 zu projizieren und durch Auswertung des mittels der bildgebenden Einrichtung 9 erfassten Streifenmusters die Tiefeninformation der in dem Bild B erfassten Szene zu ermitteln. In diesem Fall besteht die bildgebende Einrichtung 9 oftmals aus einer einzelnen Kamera und einem Projektor für das Streifenmuster.

Der Werkzeugmaschine 1 ist weiterhin eine Auswertungseinrichtung 10 zugeordnet. Die Auswertungseinrichtung 10 kann eine eigenständige, von der numerischen Steuerung 6 verschiedene Einrichtung sein. In diesem Fall kann die Auswertungseinrichtung 10 in der Nähe der numerischen Steuerung 6 angeordnet sein oder weit entfernt von der numerischen Steuerung 6 angeordnet sein. Im letztgenannten Fall kann die Auswertungseinrichtung 10 mit der numerischen Steuerung 6 beispielsweise über das Internet verbunden sein. Insbesondere im erstgenannten Fall kann die Auswertungseinrichtung 10 mit der numerischen Steuerung 6 eine Einheit bilden. Dies ist in FIG 1 durch eine gestrichelte Umrahmung 11 angedeutet.

Die Auswertungseinrichtung 10 ist mit der bildgebenden Einrichtung 9 verbunden, um die von der bildgebenden Einrichtung 9 erfassten Bilder B entgegennehmen zu können. Weiterhin ist die Auswertungseinrichtung 10 mit der numerischen Steuerung 6 verbunden, um mit der numerischen Steuerung 6 kommunizieren zu können. Falls die Auswertungseinrichtung 10 und die numerische Steuerung 6 eine Einheit bilden, kann die Kommunikation zwischen der Auswertungseinrichtung 10 und der numerischen Steuerung 6 entartet sein, da eine explizite Kommunikation als solche innerhalb der Einheit nicht erforderlich ist.

Die Auswertungseinrichtung 10 ist mit einem Computerprogramm 12 programmiert. Falls die Auswertungseinrichtung 10 und die numerische Steuerung 6 eine Einheit bilden, können auch das Steuerprogramm 7 und das Computerprogramm 12 eine Einheit bilden. Dies ist in FIG 1 durch eine gestrichelte Umrahmung 13 angedeutet.

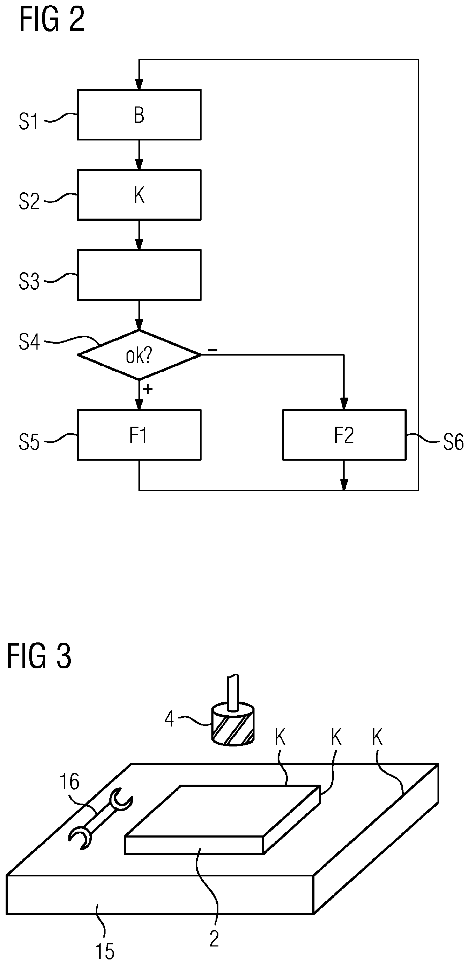

Das Computerprogramm 12 umfasst Maschinencode 14, der von der Auswertungseinrichtung 10 abarbeitbar ist. Die Abarbeitung des Maschinencodes 14 durch die Auswertungseinrichtung 10 bewirkt, dass die Auswertungseinrichtung 10 ein Betriebsverfahren ausführt, das nachstehend in Verbindung mit FIG 2 näher erläutert wird.

Gemäß FIG 2 nimmt die Auswertungseinrichtung 10 in einem Schritt S1 von der bildgebenden Einrichtung 9 eines der Bilder B entgegen. FIG 3 zeigt - rein beispielhaft - ein mögliches Bild B. In einem Schritt S2 ermittelt die Auswertungseinrichtung 10 anhand des erfassten Bildes B signifikante Konturen K. Anhand der ermittelten Konturen K ermittelt die Auswertungseinrichtung 10 in einem Schritt S3 die Anzahl, die Art und/oder die Anordnung von Objekten, die sich im Arbeitsraum 5 befinden. Beispielsweise kann die Auswertungseinrichtung 10 einen Werkstücktisch 15, das Werkstück 2, das Werkzeug 4 und ein weiteres Objekt 16 - in FIG 3 rein beispielhaft als Schraubenschlüssel dargestellt - ermitteln. Es können auch für andere Objekte deren Art und/oder deren Anordnung ermittelt werden. Beispielsweise sind in FIG 3 Spannelemente, mittels derer das reale Werkstück 2 auf dem Werkstücktisch 15 befestigt ist, nicht mit dargestellt. Unabhängig von den konkret vorgenommenen Auswertungen gilt jedoch, dass derartige Auswertungen von erfassten dreidimensionalen Bildern B Fachleuten allgemein bekannt sind.

Die Ermittlung der Anzahl, der Art und der Anordnung der Objekte kann unter Umständen auch direkt erfolgen. Die Ermittlung über Konturen oder allgemein über signifikante Merkmale der Objekte ist jedoch bevorzugt.

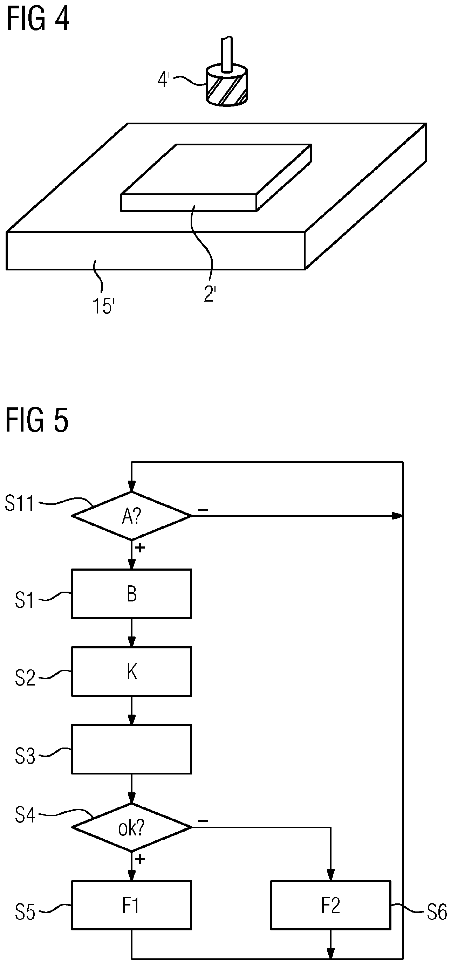

In einem Schritt S4 vergleicht die Auswertungseinrichtung 10 die Anzahl, die Art und/oder die Anordnung der Objekte, die sich im realen Arbeitsraum 5 befinden, mit der Anzahl, der Art und/oder der Anordnung von virtuellen Referenzobjekten. Die virtuellen Referenzobjekte können beispielsweise in einem virtuellen Arbeitsraum der Werkzeugmaschine 1 definiert sein. Beispielsweise kann der Auswertungseinrichtung 10 eine virtuelle Szene vorgegeben sein, die entsprechend der Darstellung in FIG 4 zwar als virtuelle Objekte einen virtuellen Werkstücktisch 15', ein virtuelles Werkstück 2' und ein virtuelles Werkzeug 4' enthält, aber kein mit dem weiteren Objekt 16 korrespondierendes virtuelles Objekt.

Wenn die von der Auswertungseinrichtung 10 vorgenommenen Prüfungen alle positiv verlaufen, geht die Auswertungseinrichtung 10 zu einem Schritt S5 über. Im Schritt S5 stuft die Auswertungseinrichtung 10 den im Schritt S4 erfolgten Vergleich als ordnungsgemäß ein und übermittelt daher ein Freigabesignal F1 an die numerische Steuerung 6. Anderenfalls geht die Auswertungseinrichtung 10 zu einem Schritt S6 über. Im Schritt S6 stuft die Auswertungseinrichtung 10 den im Schritt S4 erfolgten Vergleich als nicht ordnungsgemäß ein. Im Schritt S6 übermittelt die Auswertungseinrichtung 10 nicht das Freigabesignal F1 an die numerische Steuerung 6. Sie kann aber entsprechend der Darstellung in FIG 2 stattdessen eine Fehlermeldung F2 an die numerische Steuerung 6 übermitteln.

Es ist möglich, dass die Auswertungseinrichtung 10 im Schritt S4 nur die Anzahl der im realen Arbeitsraum 5 befindlichen realen Objekte mit der korrespondierenden Anzahl an virtuellen Objekten im virtuellen Arbeitsraum vergleicht. In diesem Fall ist die Prüfung positiv, wenn die Anzahlen übereinstimmen. Alternativ ist es möglich, dass die Auswertungseinrichtung 10 im Schritt S4 nur die Art der im realen Arbeitsraum 5 befindlichen realen Objekte mit der korrespondierenden Art von virtuellen Objekten im virtuellen Arbeitsraum vergleicht. In diesem Fall ist die Prüfung positiv, wenn die Arten übereinstimmen. Ebenso ist es möglich, dass die Auswertungseinrichtung 10 im Schritt S4 nur die Anordnung der im realen Arbeitsraum 5 befindlichen realen Objekte mit der korrespondierenden Anordnung der virtuellen Objekte vergleicht. In diesem Fall ist die Prüfung positiv, wenn die Anordnungen übereinstimmen. Vorzugsweise führt die Auswertungseinrichtung 10 im Rahmen des Schrittes S4 jedoch mehrere dieser Prüfungen durch.

Im Rahmen der Prüfungen des Schrittes S4 kann die Auswertungseinrichtung 10 beispielsweise folgende Sachverhalte prüfen:
- Wird ein reales Werkstück 2 erkannt?
- Stimmt das erkannte reale Werkstück 2 mit dem erwarteten Werkstück - definiert durch das korrespondierende virtuelle Werkstück 2' - überein? Das virtuelle Werkstück 2 kann beispielsweise durch das Teileprogramm 8 definiert sein.
- Ist das erkannte reale Werkstück 2 - eventuell innerhalb eines zulässigen Toleranzbereichs - korrekt positioniert?
- Stimmen die Anzahl an Spannmitteln, deren Art und deren Anordnung mit den entsprechenden virtuellen Spannmitteln überein?
- Befindet sich ein Fremdkörper - beispielsweise der in FIG 3 schematisch dargestellte Schraubenschlüssel - im Arbeitsraum 5?
- Wird das korrekte Werkzeug 4 verwendet und ist das Werkzeug 4 ordnungsgemäß (beispielsweise bei einem Bohrer nicht abgebrochen)?

Zur korrekten Durchführung des Vergleichs müssen der Auswertungseinrichtung 10 verschiedene Abbildungsparameter der bildgebenden Einrichtung 9 bekannt sein. Es ist möglich, dass diese Abbildungsparameter oder hierzu gleichwertige Parameter die Auswertungseinrichtung 10 direkt vorgegeben werden. Beispielsweise können die Position der bildgebenden Einrichtung 9, deren Orientierung und der Öffnungswinkel des erfassten Bildes B bekannt sein. Alternativ ist es möglich, dass in dem erfassten Bild B Objekte vorhanden sind, deren Anordnung und/oder Orientierung im realen Arbeitsraum 5 der Auswertungseinrichtung 10 bekannt ist. In diesem Fall können die Abbildungsparameter der bildgebenden Einrichtung 9 von der Auswertungseinrichtung 10 anhand dieser Objekte ermittelt werden.

Im Regelfall führt die Auswertungseinrichtung 10 die Vorgehensweise von FIG 2 nicht permanent aus, sondern nur dann, wenn ihr von der numerischen Steuerung 6 zuvor eine entsprechende Anfrage A übermittelt wurde. In diesem Fall ist entsprechend der Darstellung in FIG 5 ein zusätzlicher Schritt S11 vorhanden, in dem die Auswertungseinrichtung 10 prüft, ob ihr von der numerischen Steuerung 6 die Anfrage A übermittelt wurde. Nur wenn dies der Fall ist, geht die Auswertungseinrichtung 10 zu den Schritten S1 bis S6 über.

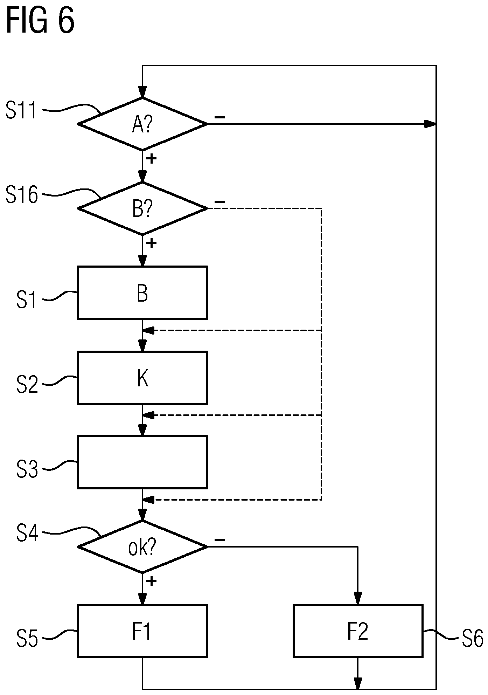

Es ist entsprechend der Darstellung in FIG 5 möglich, dass die Auswertungseinrichtung 10 aufgrund der Anfrage A alle Schritte S1 bis S4 und einen der beiden Schritte S5 und S6 ausführt, also das vollständige Verfahren von der Entgegennahme eines Bildes B bis zur Ermittlung oder Nichtübermittlung des Freigabesignals F1. Alternativ ist es entsprechend der Darstellung in FIG 6 möglich, dass die Auswertungseinrichtung 10 aufgrund der Anfrage A zunächst in einem Schritt S16 prüft, ob sie zur Ermittlung des Freigabesignals F1 bzw. der Fehlermeldung F2 von der bildgebenden Einrichtung 9 ein neues Bild B entgegennehmen muss. Ein neues Bild B muss die Auswertungseinrichtung 10 immer dann entgegennehmen, wenn ihr kein Bild B vorliegt oder wenn ihr zwar ein Bild B vorliegt, dieses Bild B aber nicht mehr aktuell ist bzw. nicht mehr mit Sicherheit aktuell ist. Wenn der Auswerteeinrichtung 10 kein Bild B vorliegt oder das Bild nicht bzw. nicht mit Sicherheit aktuell ist, geht die Auswertungseinrichtung 10 gemäß FIG 6 zum Schritt S1 über. Anderenfalls kann sie - je nach Ausgestaltung des Verfahrens - zum Schritt S2, zum Schritt S3, zum Schritt S4 und eventuell sogar direkt zu einem der Schritte S5 und S6 übergehen. In jedem dieser Fälle ermittelt die Auswertungseinrichtung 10 somit das Freigabesignal F1 bzw. die Fehlermeldung F2 anhand des ihr bereits vorliegenden, als aktuell erkannten Bildes B.

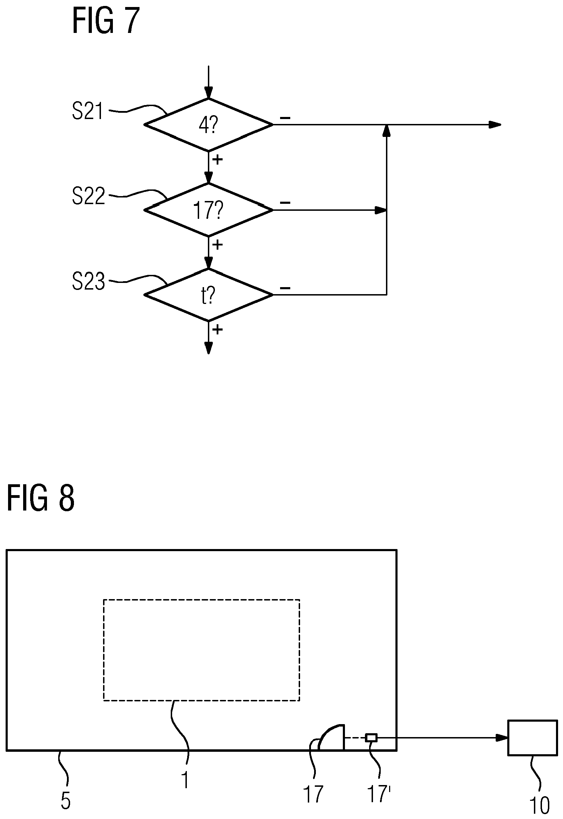

Die Prüfung, ob der Auswertungseinrichtung 10 ein Bild B vorliegt oder nicht, kann die Auswertungseinrichtung 10 ohne weiteres vornehmen. Zur Prüfung, ob das der Auswertungseinrichtung 10 vorliegende Bild B aktuell ist, kann der Schritt S16 entsprechend der Darstellung in FIG 7 in Schritte S21, S22 und S23 aufgeteilt sein. Im Schritt S21 kann die Auswertungseinrichtung 10 beispielsweise prüfen, ob ein Wechsel des realen Werkzeugs 4 erfolgt ist. Ein derartiger Wechsel kann der Auswertungseinrichtung 10 beispielsweise bekannt sein, weil sie selbst die entsprechende Wechseleinrichtung der Werkzeugmaschine 1 überwacht oder weil ihr von der numerischen Steuerung 6 eine entsprechende Meldung übermittelt wird. Im Schritt S22 kann die Auswertungseinrichtung 10 beispielsweise prüfen, ob ein Zugang 17 zum realen Arbeitsraum 5 - beispielsweise entsprechend der Darstellung in FIG 8 eine Tür - geöffnet wurde. Die Ausführung der Schritte S1 bis S6 kann in diesem Fall gegebenenfalls verzögert werden, bis der Zugang 17 wieder geschlossen wurde. Beispielsweise kann der Zugang 17 zum Erkennen eines Öffnens und eines Schließens mit einem entsprechenden Sensor 17' versehen sein, der mit der Auswertungseinrichtung 10 kommunizieren kann. Es ist sogar möglich, dass die Auswertungseinrichtung 10 von der bildgebenden Einrichtung 9 kontinuierlich Bilder B entgegennimmt und auswertet und anhand der Bilder B erkennt, ob und gegebenenfalls wann der Zugang 17 geöffnet und geschlossen wird. Im Schritt S23 kann die Auswertungseinrichtung 10 beispielsweise prüfen, ob ein vorhandenes Bild B ein vorbestimmtes "Alter" überschritten hat. Dieser Vergleich kann durch den Vergleich des dem Bild B zugeordneten Erfassungszeitpunkts t (Zeitstempel) mit der aktuellen Zeit erfolgen.

Wenn eine der Prüfungen der Schritte S21 bis S23 ein positives Ergebnis liefert, ist eine erneute Erfassung eines Bildes B durch die bildgebende Einrichtung 9 und dessen Entgegennehmen durch die Auswertungseinrichtung 10 erforderlich. Nur wenn alle Prüfungen ein negatives Ergebnis liefern, kann mit einem bereits vorhandenen Bild B gearbeitet werden.

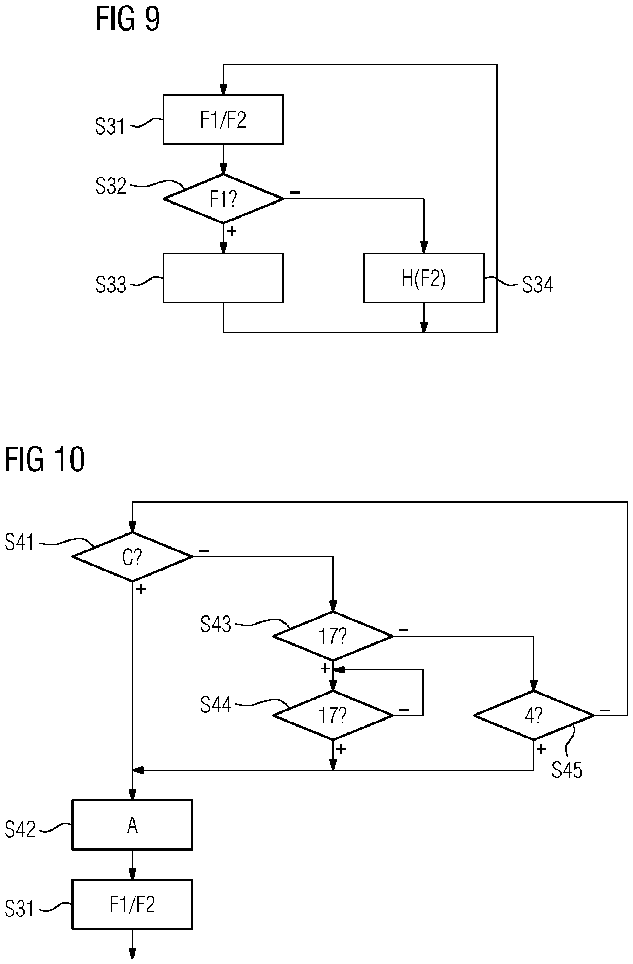

Die numerische Steuerung 6 nimmt im Rahmen des erfindungsgemäßen Betriebsverfahren in der Regel entsprechend der Darstellung in FIG 9 zunächst in einem Schritt S31 von der Auswertungseinrichtung 10 das Freigabesignal F1 entgegen bzw. nicht entgegen. Gegebenenfalls nimmt sie stattdessen die Fehlermeldung F2 entgegen. In einem Schritt S32 prüft die numerische Steuerung 6, ob sie von der Auswertungseinrichtung 10 das Freigabesignal F1 erhalten hat oder nicht. Hat die numerische Steuerung 6 das Freigabesignal F1 erhalten, geht die numerische Steuerung 6 zu einem Schritt S33 über. Im Schritt S33 führt die numerische Steuerung 6 die Bearbeitung des realen Werkstücks 2 entsprechend dem Teileprogramm 8 (bzw. zumindest einen Abschnitt dieser Bearbeitung) aus. Hat die numerische Steuerung 6 das Freigabesignal F1 nicht erhalten, geht die numerische Steuerung 6 zu einem Schritt S34 über. Im Schritt S34 führt die numerische Steuerung 6 die Bearbeitung des realen Werkstücks 2 nicht aus. Stattdessen kann die numerische Steuerung 6 über eine Benutzerschnittstelle 18 (siehe FIG 1) beispielsweise einen Hinweis H an eine Bedienperson 19 der numerischen Steuerung 6 ausgeben. Den Hinweis H kann die numerische Steuerung 6 aus der Fehlermeldung F2 ableiten. Es ist möglich, dass der Hinweis H für alle Fehlermeldungen F2 einheitlich ist. Alternativ ist es möglich, dass die Fehlermeldung F2 spezifisch für den erkannten Fehler ist und auch der Hinweis H spezifisch für den von der Auswertungseinrichtung 10 erkannten Fehler ist.

Der Abschnitt der Bearbeitung, der aufgrund des Freigabesignals F1 ausgeführt wird, kann nach Bedarf bestimmt sein. Im einfachsten Fall handelt es sich um die vollständige Bearbeitung des Werkstücks 2 durch die Werkzeugmaschine 1. Alternativ kann es sich um einen von mehreren Abschnitten handeln. Die Abschnitte können durch das Teileprogramm 8 als solches definiert sein. Beispielsweise kann das Teileprogramm 8 gezielt Befehle umfassen, die explizit jeweils eine Anforderung des Freigabesignals F1 enthalten. Auch kann das Teileprogramm 8 Befehle umfassen, die implizit jeweils eine Anforderung des Freigabesignals F1 enthalten. Beispiele derartiger Befehle können beispielsweise Befehle zum Wechseln des Werkzeugs 4 oder für einen Wechsel des Werkstücks 2 sein. Auch kann eine Unterbrechung der Bearbeitung als solche - hervorgerufen beispielsweise durch das Öffnen des Zugangs 17 zum Arbeitsraum 5 - die Grenze zwischen zwei Abschnitten der Bearbeitung definieren.

Im Ergebnis führt die Auswertungseinrichtung 10 die von ihr ergriffenen Maßnahmen somit vor Beginn der Ausführung eines Abschnitts der Bearbeitung des realen Werkstücks 2 durch die Werkzeugmaschine 1 aus. Das Freigabesignal F1 ist dafür charakteristisch, dass die Ausführung des Abschnitts der Bearbeitung des realen Werkstücks 2 durch die Werkzeugmaschine 1 zulässig ist. Die Fehlermeldung F2 impliziert, dass die Ausführung des Abschnitts der Bearbeitung des realen Werkstücks 2 durch die Werkzeugmaschine 1 nicht zulässig ist.

Die Vorgehensweise von FIG 9 kann beispielsweise sinnvoll sein, wenn die Erfassung des Bildes B und die darauf aufbauende Ermittlung des Freigabesignals F1 bzw. der Fehlermeldung F2 zeitlich von dem Starten der Bearbeitung des Werkstücks 2 entkoppelt ist. Beispielsweise kann die Bedienperson 19 zu einem früheren Zeitpunkt die Erfassung des Bildes B und die darauf aufbauende Ermittlung des Freigabesignals F1 bzw. der Fehlermeldung F2 anstoßen und zu einem späteren Zeitpunkt der numerischen Steuerung 6 einen Startbefehl zum Beginnen der Bearbeitung des Werkstücks 2 vorgeben.

Die prinzipielle Vorgehensweise von FIG 9 kann auf verschiedene Art und Weise ausgestaltet sein.

So ist es beispielsweise möglich, dass die numerische Steuerung 6 kontinuierlich prüft, ob eine Anfragebedingung erfüllt ist, und die Anfrage A jedes mal an die Auswertungseinrichtung 10 übermittelt, wenn die Anfragebedingung erfüllt ist. Nachstehend werden in Verbindung mit FIG 10 mögliche Ausgestaltungen der Anfragebedingung näher erläutert.

Gemäß FIG 10 kann die numerische Steuerung 6 in einem Schritt S41 prüfen, ob ihr von der Bedienperson 19 ein Startbefehl C vorgegeben wurde. Wurde der Startbefehl C vorgegeben, kann die numerische Steuerung 6 zu einem Schritt S42 übergehen. Im Schritt S42 übermittelt die numerische Steuerung 6 die Anfrage A an die Auswertungseinrichtung 10.

Wenn die numerische Steuerung 6, ausgehend vom Schritt S41, nicht zum Schritt S42 übergeht, geht sie zu einem Schritt S43 über. Im Schritt S43 kann die numerische Steuerung 6 beispielsweise prüfen, ob der Zugang 17 zum Arbeitsraum 5 geöffnet wurde. Wenn dies der Fall ist, kann die numerische Steuerung 6 in einem Schritt S44 abwarten, dass der Zugang 17 zum Arbeitsraum 5 wieder geschlossen wurde. Mit dem Schließen des Zugangs 17 kann die numerische Steuerung 6 zum Schritt S42 übergehen. Das Öffnen und das Schließen des Zugangs 17 kann die numerische Steuerung 6 beispielsweise aufgrund einer entsprechenden Kommunikation mit dem Sensor 17' (oder einem anderen Sensor) erkennen. Anderenfalls, wenn also der Zugang 17 nicht geöffnet wurde, kann die numerische Steuerung 6 zu einem Schritt S45 übergehen.

Im Schritt S45 kann die numerische Steuerung 6 beispielsweise prüfen, ob ein Wechsel des Werkzeugs 4 vorgenommen wurde. Dies kann der numerischen Steuerung 6 beispielsweise aufgrund eines entsprechenden Befehls des Teileprogramms 8 bekannt sein. Im Falle eines Wechsels des Werkzeugs 4 kann die numerische Steuerung 6 zum Schritt S42 übergehen. Anderenfalls kann die numerische Steuerung 6 wieder zum Schritt S41 zurückgehen.

Die obenstehend erläuterten möglichen Ausgestaltungen der Anfragebedingung sind nur beispielhaft. Alternativ oder zusätzlich kann die Anfragebedingung beispielsweise erfüllt sein, wenn der Werkzeugmaschine 1 ein neues Werkstück 2 zugeführt wurde. Auch andere Prüfungen sind möglich.

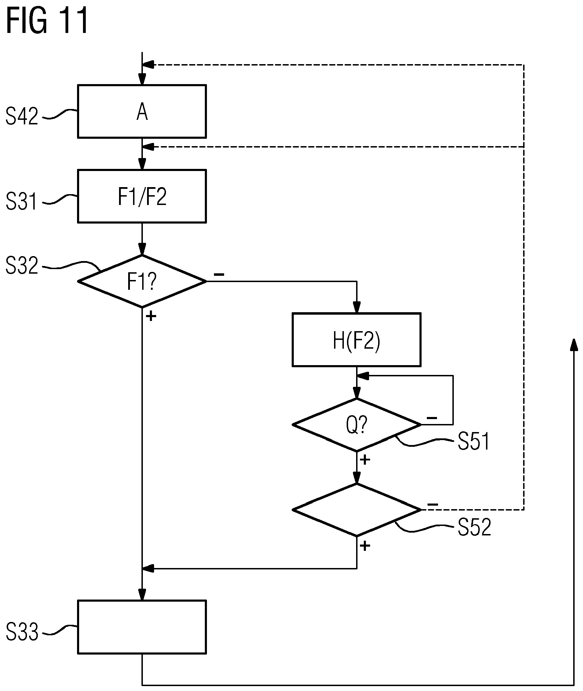

Die Vorgehensweise von FIG 9 kann - alternativ oder zusätzlich zu der Vorgehensweise von FIG 10 entsprechend der Darstellung in FIG 11 auch wie folgt ausgestaltet werden:
Ausgehend vom Schritt S34 geht die numerische Steuerung 6 zu einem Schritt S51 über. Im Schritt S51 wartet die numerische Steuerung 6 ab, ob ihr die Bedienperson 19 über die Benutzerschnittstelle 18 einen Zusatzbefehl Q vorgibt, beispielsweise eine Quittierung des Hinweises H. Es ist möglich, dass die numerische Steuerung 6 nach dem Vorgeben des Zusatzbefehls Q direkt und unbedingt zum Schritt S33 übergeht. Ebenso ist es möglich, dass die numerische Steuerung 6 nach dem Vorgeben des Zusatzbefehls Q direkt und unbedingt zum Schritt S31 bzw. zum Schritt S42 übergeht. Vorzugsweise prüft die numerische Steuerung 6 jedoch in einem nachfolgenden Schritt S52, ob der Zusatzbefehl Q eine Freigabe der Bearbeitung des Werkstücks 2 oder nur eine bloße Kenntnisnahme des Hinweises H ist. Je nach Ergebnis kann die numerische Steuerung 6 entweder zum Schritt S33 oder zum Schritt S31 bzw. zum Schritt S42 übergehen.

Beispielsweise ist es möglich, dass die Auswertungseinrichtung 10 zwar einen Fehler erkannt hat und deswegen die Fehlermeldung F2 an die numerische Steuerung 6 übermittelt, die Bedienperson 19 jedoch erkennen kann, dass der Fehler unkritisch ist, so dass trotz des Fehlers die Bearbeitung des Werkstücks 2 problemlos möglich ist. Auch ist es möglich, dass die Bedienperson 19 aufgrund des Hinweises H den der Fehlermeldung F2 zu Grunde liegenden Fehler behoben hat. In derartigen Fällen kann die Bedienperson 19 als Zusatzbefehl Q die Freigabe der Bearbeitung des Werkstücks 2 vorgeben. In anderen Fällen, beispielsweise weil die Aufspannsituation geändert werden musste, kann eine erneute Prüfung vor Ausführung der Bearbeitung des Werkstücks 2 sinnvoll sein. In derartigen Fällen kann die Bedienperson 19 beispielsweise als Zusatzbefehl Q lediglich eine bloße Kenntnisnahme vorgeben.

Aufgrund des Umstands, dass die Auswertungseinrichtung 10 und die numerische Steuerung 6 gegebenenfalls eine Einheit bilden können, können in diesem Fall auch die obenstehend in Verbindung mit den FIG 9 bis 11 erläuterten Maßnahmen auf die Abarbeitung des Maschinencodes 14 durch die Auswertungseinrichtung 10 (welche in diesem Fall ja eine Einheit mit der numerischen Steuerung 6 bildet) zurückzuführen sein.

Zusammengefasst betrifft die vorliegende Erfindung somit folgenden Sachverhalt:
Einer Werkzeugmaschine 1 ist eine Auswertungseinrichtung 10 zugeordnet. Die Auswertungseinrichtung 10 nimmt vor Beginn der Ausführung eines Abschnitts einer Bearbeitung eines realen Werkstücks 2 durch die Werkzeugmaschine 1 von einer bildgebenden Einrichtung 9 ein dreidimensionales Bild B eines realen Arbeitsraums 5 der Werkzeugmaschine 1 entgegen. Sie ermittelt anhand des erfassten dreidimensionalen Bildes B die Anzahl, die Art und/oder die Anordnung von im Arbeitsraum 5 befindlichen realen Objekten 2, 4, 15, 16. Sie vergleicht die Anzahl, die Art und/oder die Anordnung der im Arbeitsraum 5 befindlichen realen Objekte 2, 4, 15, 16 mit der Anzahl, der Art und/oder der Anordnung von virtuellen Referenzobjekten 2', 4', 15'. Sie ermittelt anhand des Vergleichs, ob die Ausführung des Abschnitts der Bearbeitung des realen Werkstücks 2 durch die Werkzeugmaschine 1 zulässig ist. Im einen Fall übermittelt die Auswertungseinrichtung 10 ein Freigabesignal F1 an eine die Werkzeugmaschine 1 steuernde numerische Steuerung 6, im anderen Fall nicht.

Die vorliegende Erfindung weist viele Vorteile auf. Insbesondere lassen sich auf einfache und zuverlässige Weise nahezu alle Fehlerquellen vermeiden, die bei der Bearbeitung des Werkstücks 2 durch die Werkzeugmaschine 1 zu gefährlichen Zuständen führen können. Weiterhin ist auf einfache Weise jederzeit eine Anpassung der Betriebsweise der Auswertungseinrichtung 10 an geänderte Umstände möglich. Es ist möglich, das Steuerprogramm 7 und/oder das Computerprogramm 12 in geschützter Form auszubilden, so dass es von der Bedienperson 19 der Werkzeugmaschine 1 nicht oder zumindest nicht ohne weiteres änderbar ist. Weiterhin ist es möglich, dass das erfindungsgemäße Betriebsverfahren stets und unbedingt ausgeführt wird. Es ist aber ebenso möglich, dass beispielsweise durch einen speziellen Befehl des Teileprogramms 8 oder durch eine Vorgabe der Bedienperson 19 festgelegt wird, ob das erfindungsgemäße Betriebsverfahren ausgeführt wird oder nicht.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für eine Werkzeugmaschine (1),
- wobei eine Auswertungseinrichtung (10) vor Beginn der Ausführung eines Abschnitts einer Bearbeitung eines realen Werkstücks (2) durch die Werkzeugmaschine (1) von einer bildgebenden Einrichtung (9) ein dreidimensionales Bild (B) eines realen Arbeitsraums (5) der Werkzeugmaschine (1) entgegennimmt,
- wobei die Auswertungseinrichtung (10) anhand des erfassten dreidimensionalen Bildes (B) die Anzahl, die Art und/oder die Anordnung von im Arbeitsraum (5) befindlichen realen Objekten (2, 4, 15, 16) ermittelt,
- wobei die Auswertungseinrichtung (10) die Anzahl, die Art und/oder die Anordnung der im Arbeitsraum (5) befindlichen realen Objekte (2, 4, 15, 16) mit der Anzahl, der Art und/oder der Anordnung von virtuellen Referenzobjekten (2', 4', 15') vergleicht,
- wobei die Auswertungseinrichtung (10) anhand des Vergleichs ermittelt, ob die Ausführung des Abschnitts der Bearbeitung des realen Werkstücks (2) durch die Werkzeugmaschine (1) zulässig ist,
- wobei die Auswertungseinrichtung (10) im Falle der Zulässigkeit der Bearbeitung ein Freigabesignal (F1) an eine die Werkzeugmaschine (1) steuernde numerische Steuerung (6) und im Falle der Unzulässigkeit der Bearbeitung das Freigabesignal (F1) nicht an die numerische Steuerung (6) übermittelt.

2. Betriebsverfahren nach Anspruch 1,
**dadurch gekennzeichnet,**
**dass** die Auswertungseinrichtung (10) von der numerischen Steuerung (6) eine Anfrage (A) entgegennimmt und dass die Auswertungseinrichtung (10) das Freigabesignal (F1) aufgrund der Anfrage (A) an die numerische Steuerung (6) übermittelt.

3. Betriebsverfahren nach Anspruch 2,
**dadurch gekennzeichnet,**
**dass** die Auswertungseinrichtung (10) aufgrund der Anfrage (A) stets das vollständige Betriebsverfahren von Anspruch 1 ausführt.

4. Betriebsverfahren nach Anspruch 2,
**dadurch gekennzeichnet,**
**dass** die Auswertungseinrichtung (10) aufgrund der Anfrage (A) in Abhängigkeit davon, ob ihr bereits ein dreidimensionales Bild (B) des realen Arbeitsraums (5) der Werkzeugmaschine (1) vorliegt und ob ein ihr gegebenenfalls bereits vorliegendes dreidimensionales Bild (B) des realen Arbeitsraums (5) der Werkzeugmaschine (1) aktuell ist, entweder das vollständige Betriebsverfahren von Anspruch 1 ausführt oder das Freigabesignal (F1) anhand des ihr bereits vorliegenden aktuellen dreidimensionalen Bildes (B) des realen Arbeitsraums (5) der Werkzeugmaschine (1) ermittelt.

5. Betriebsverfahren nach einem der obigen Ansprüche,
**dadurch gekennzeichnet,**
**dass** die numerische Steuerung (6) prüft, ob eine Anfragebedingung erfüllt ist, und dass die numerische Steuerung (6) die Anfrage (A) jedes mal, wenn die Anfragebedingung erfüllt ist, an die Auswertungseinrichtung (10) übermittelt.

6. Betriebsverfahren nach Anspruch 5,
**dadurch gekennzeichnet,**
**dass** die Anfragebedingung dadurch erfüllt wird, dass die numerische Steuerung (6) von einer Bedienperson (19) einen Startbefehl (C) zum Ausführen des Abschnitts der Bearbeitung des realen Werkstücks (2) entgegennimmt.

7. Betriebsverfahren nach Anspruch 5 oder 6,
**dadurch gekennzeichnet,**
**dass** die Anfragebedingung dadurch erfüllt wird, dass die numerische Steuerung (6) nach einem Öffnen eines Zugangs (17) zum Arbeitsraum (5) ein Schließen des Zugangs (17) erkennt.

8. Betriebsverfahren nach Anspruch 5, 6 oder 7,
**dadurch gekennzeichnet,**
**dass** die Anfragebedingung dadurch erfüllt wird, dass die Werkzeugmaschine (1) aufgrund der Steuerung durch die numerische Steuerung (6) ein neues Werkzeug (2) in einen Werkzeughalter der Werkzeugmaschine (1) eingesetzt hat.

9. Betriebsverfahren nach einem der obigen Ansprüche,
**dadurch gekennzeichnet,**
**dass** die Auswertungseinrichtung (10) im Falle der Unzulässigkeit der Bearbeitung eine Fehlermeldung (F2) an die numerische Steuerung (6) übermittelt, dass die numerische Steuerung (6) im Falle der Übermittlung des Freigabesignals (F1) den Abschnitt der Bearbeitung des realen Werkstücks (2) ausführt und im Falle der Übermittlung der Fehlermeldung (F2) die Bearbeitung des realen Werkstücks (2) nicht ausführt und stattdessen einen aus der Fehlermeldung (F2) abgeleiteten Hinweis (H) über eine Benutzerschnittstelle (18) an eine Bedienperson (19) der numerischen Steuerung (6) ausgibt.

10. Betriebsverfahren nach einem der obigen Ansprüche,
**dadurch gekennzeichnet,**
**dass** die numerische Steuerung (6) im Falle der Nichtübermittlung des Freigabesignals (F1) von der Bedienperson (19) einen Zusatzbefehl (Q) entgegennimmt und aufgrund der Entgegennahme des Zusatzbefehls (Q) mit oder ohne erneute Übermittlung der Anfrage (A) den Abschnitt der Bearbeitung des realen Werkstücks (2) ausführt.

11. Computerprogramm, wobei das Computerprogramm Maschinencode (14) umfasst, der von einer Auswertungseinrichtung (10) abarbeitbar ist, wobei die Abarbeitung des Maschinencodes (14) durch die Auswertungseinrichtung (10) bewirkt, dass die Auswertungseinrichtung (10) ein Betriebsverfahren nach einem der Ansprüche 1 bis 4 ausführt.

12. Computerprogramm nach Anspruch 11,
**dadurch gekennzeichnet,**
**dass** die Auswertungseinrichtung (10) mit der numerischen Steuerung (6) eine Einheit bildet und dass die Abarbeitung des Maschinencodes (14) durch die Auswertungseinrichtung (10) bewirkt, dass die Auswertungseinrichtung (10) ein Betriebsverfahren nach einem der Ansprüche 5 bis 10 ausführt.

13. Auswertungseinrichtung, wobei die Auswertungseinrichtung mit einem Computerprogramm (12) nach Anspruch 11 programmiert ist, so dass die Auswertungseinrichtung im Betrieb ein Betriebsverfahren nach einem der Ansprüche 1 bis 4 ausführt.

14. Auswertungseinrichtung nach Anspruch 13,
**dadurch gekennzeichnet,**
**dass** die Auswertungseinrichtung mit der numerischen Steuerung (6) eine Einheit bildet und dass die Auswertungseinrichtung mit einem Computerprogramm (12) nach Anspruch 12 programmiert ist, so dass die Abarbeitung des Maschinencodes (14) durch die Auswertungseinrichtung bewirkt, dass die Auswertungseinrichtung ein Betriebsverfahren nach einem der Ansprüche 5 bis 10 ausführt.

15. Werkzeugmaschine,
- wobei die Werkzeugmaschine eine Anzahl von Achsen (3) aufweist, mittels derer ein reales Werkzeug (4) und ein reales Werkstück (2) innerhalb eines Arbeitsraums (5) der Werkzeugmaschine relativ zueinander verfahrbar sind,
- wobei die Werkzeugmaschine eine numerische Steuerung (6) aufweist, von der die Achsen (3) zur Bearbeitung des realen Werkstücks (2) durch die Werkzeugmaschine lagegeregelt ansteuerbar sind,
- wobei die Werkzeugmaschine eine bildgebende Einrichtung (9) aufweist, mittels derer ein dreidimensionales Bild (B) des realen Arbeitsraums (5) der Werkzeugmaschine erfassbar ist,
- wobei der Werkzeugmaschine eine Auswertungseinrichtung (10) nach Anspruch 13 oder 14 zugeordnet ist, die zur Entgegennahme der von der bildgebenden Einrichtung (9) erfassten dreidimensionalen Bilder (B) mit der bildgebenden Einrichtung (9) und zur Kommunikation mit der numerischen Steuerung (6) mit der numerischen Steuerung (6) verbunden ist.
